# EUROPEAN PATENT APPLICATION

(11) **EP 4 772 287 A1**
(43) Date of publication of application: **08.07.2026**
(21) Application number: 25208407.4
(22) Date of filing: 13.10.2025
(51) Int. Cl.: B05D 3/00, F26B 13/00, F26B 13/10, F26B 21/55, H01M 4/00

(54) **APPARATUS FOR DRYING COATED ELECTRODE AND METHOD OF DRYING COATED ELECTRODE USING THE APPARATUS**

(30) Priority: 22.10.2024 KR 20240145060
(71) Applicant: SAMSUNG SDI CO., LTD., Yongin-si, Gyeonggi-do 17084 (KR)
(72) Inventor: CHEONG, Kyeongbeom, 17084 Yongin-si (KR); MOON, Gi Jong, 17084 Yongin-si (KR); JANG, Jaesoon, 17084 Yongin-si (KR)
(74) Representative: Marks & Clerk LLP

(57) **Abstract**

An apparatus for drying a coated electrode includes a perforated plate nozzle located above a transfer path for the coated electrode. A duct is provided to connect to an area of the perforated plate nozzle that does not face the coated electrode among areas of the perforated plate nozzle. The duct may supply hot air flowing outside opposite ends of the coated electrode to a lower portion of the coated electrode.

## Description

### BACKGROUND

### 1. Technical Field

The present disclosure relates to an apparatus for drying a coated electrode and a method of drying a coated electrode using the apparatus, and more particularly, to an apparatus and method for drying a coated electrode capable of improving energy efficiency in a drying process through the design of a perforated plate nozzle.

### 2. Related Art

A process of manufacturing an electrode for lithium-ion batteries (LIBs) may start with mixing process of combining a solvent, an active material, a conductive agent, and a binder, followed by coating, drying, pressing, and slitting, and notching processes.

The coating and drying processes, accounts for a significant portion of the costs of the electrode manufacturing process, ranging from 13% to 22% of the total process cost. In particular, evaporation of solvent is a large portion of the cost and, thus, energy savings in solvent drying may be an important issue.

In related art, airflow in a specific area is not used for drying the coated electrode and is either recirculated by a circulation/exhaust fan through a perforated plate provided over the fan or partially discharged, thereby resulting in a reduction in drying efficiency.

### SUMMARY

Embodiments of the present disclosure are directed to providing an apparatus for drying a coated electrode and a method of drying a coated electrode using the apparatus, with the apparatus and method being capable of improving energy efficiency by supplying hot air, which otherwise flows outside a coated electrode and is wasted, to a lower portion of the coated electrode.

An apparatus for drying a coated electrode according to embodiments of the present disclosure may include a perforated plate nozzle located above a transfer path for the coated electrode, and a duct connected to an area of the perforated plate nozzle that does not face the coated electrode among areas of the perforated plate nozzle, the duct being configured to supply hot air, flowing outside opposite ends of the coated electrode, to a lower portion of the coated electrode.

The duct may be formed in a U-shape.

The duct may include a perforated area in a region facing a lower surface of the coated electrode, and the perforated area is configured to supply hot air to the lower portion of the coated electrode.

The duct is configured to cause a temperature of the coated electrode to increase. This can enhance energy efficiency in a drying process.

The duct may be configured to prevent introduction of external air from an inlet and an outlet of the apparatus that are arranged along the transfer path for the coated electrode by directing hot air supplied to the lower portion of the coated electrode.

The apparatus may further include a door provided on an inner surface of the duct below the transfer path, and configured to adjust a width of a perforated plate. The door may be flexible.

The door may include a door guide configured to prevent the door from being displaced in a direction perpendicular to a width direction of the perforated plate, and a doorknob configured to support sliding movement of the door to adjust the width of the perforated plate.

A position and a surface area of a perforated area through which hot air is discharged to the lower portion of the coated electrode may be adjustable through manipulation of the door knob.

The duct is configured such that supply of air to the lower portion of the coated electrode may be through perforations in a residual area other than an area covered with the door among areas of the perforated plate, and diameters of the perforations may decrease from a central area of the perforate plate to a side portion area thereof.

A method of drying a coated electrode according to embodiments of the present disclosure may be performed by an apparatus for drying the coated electrode and include steps of (a) designing a duct connected to opposite side portions of a perforated plate nozzle, (b) supplying hot air to a lower portion of the coated electrode through the duct, and (c) performing a process of drying the coated electrode by controlling a width of a perforated plate.

The step (a) may include designing the duct connected to an area of the perforated plate nozzle that does not face the coated electrode among areas of the perforated plate nozzle located above a transfer path for the coated electrode.

The step (a) may include designing the duct in a U-shape.

The step (b) may include supplying hot air to the lower portion of the coated electrode through the duct including a perforated area in a region facing a lower surface of the coated electrode.

The step (b) may include supplying hot air to the lower portion of the coated electrode and blocking external air from being introduced from an inlet and an outlet of the apparatus that are provided for the coated electrode.

The step (c) may include controlling of the width of the perforated plate using a door comprising (i) a door guide disposed below the coated electrode and configured to prevent the door from being displaced, and (ii) a doorknob configured to support sliding movement of the door for adjusting the width of the perforated plate.

The step (c) may include performing the drying process by supplying the hot air through holes having diameters that decrease from a central area to a side area.

An apparatus for drying a coated electrode according to embodiments of the present disclosure may include a memory storing a program that performs nozzle design based on energy efficiency in a process of drying the coated electrode, and a processor configured to execute the program. The processor may perform the nozzle design to include a duct connected to an area of a perforated plate nozzle located above a transfer path for the coated electrode. The duct may be configured to supply hot air, flowing outside opposite ends of the coated electrode, to a lower portion of the coated electrode.

The processor may design the duct in a U-shape.

The processor may adjust a width of a perforated plate by controlling a door located below a transfer path for the coated electrode.

The processor may adjust the width of the perforated plate based on specifications of the coated electrode.

According to the present disclosure, there is an effect of rapidly increasing the temperature of a coated electrode and improving energy efficiency in a drying process by supplying hot air, which flows outside a coated electrode and is wasted, to a lower portion of the coated electrode.

A drying furnace may be maintained in a negative pressure, allowing external air to be introduced through an inlet and an outlet for the coated electrode. According to the present disclosure, a U-shaped duct may prevent external air from flowing to the lower portion of the coated electrode, thereby further improving energy efficiency in the drying process.

However, effects that can be achieved through the present disclosure are not limited to the above-described effects, and other technical effects not mentioned will be clearly understood by those skilled in the art from the description of the invention described below.

At least some of the above and other features of the invention are set out in the claims.

### BRIEF DESCRIPTION OF THE DRAWINGS

The drawings illustrate example embodiments of the present disclosure and further describe example aspects of the present disclosure together with the detailed description of the present disclosure. But the present disclosure is not limited to the embodiments shown in the drawings.
FIG. 1 shows an electrode assembly of a secondary battery.
FIG. 2 shows a configuration of a pouch-type secondary battery.
FIG. 3 shows an external appearance configuration of a prismatic secondary battery.
FIG. 4 is a cross-sectional view of a cylindrical secondary battery.
FIGS. 5A and 5B show the structure of an internal circulation-type drying furnace according to a related art.
FIG. 6 shows a width of a coated electrode and a width of a perforated plate nozzle according to the related art.
FIG. 7 shows an apparatus for drying a coated electrode according to embodiments of the present disclosure.
FIG. 8 is a diagram of airflow movement resulting from installation of a U-shaped duct according to embodiments of the present disclosure.
FIG. 9 is a diagram of external air movement resulting from the installation of the U-shaped duct according to embodiments of the present disclosure.
FIG. 10 shows a mechanism for adjusting a width of a perforated plate according to embodiments of the present disclosure.
FIG. 11 shows the effect of improvement in temperature increase of a coated electrode over time according to embodiments of the present disclosure.
FIG. 12 shows a method of drying a coated electrode according to embodiments of the present disclosure.
FIG. 13 is a block diagram of a computer system for implementing the method according to embodiments of the present disclosure.
FIG. 14 shows an example of a secondary battery module in which secondary batteries manufactured according to examples of the present disclosure are arranged.
FIG. 15 shows a secondary battery pack including the secondary battery module illustrated in FIG. 14.
FIG. 16 is a conceptual view of a vehicle including the secondary battery pack illustrated in FIG. 15.

### Detailed description

Hereinafter, example embodiments of the present disclosure will be described, in detail, with reference to the accompanying drawings. The terms or words used in the present specification and claims are not to be limitedly interpreted based on their general or ordinary meaning, and should be interpreted as meanings and concepts that are consistent with the technical idea of the present disclosure on the basis of the principle that an inventor can be their own lexicographer to appropriately define concepts of terms to describe their invention in the best way.

The example embodiments described in this specification and the configurations shown in the drawings are only some example embodiments of the present disclosure and do not represent all of the aspects of the present disclosure. Accordingly, it should be understood that there may be various equivalents and modifications that can replace or modify one or more example embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges is within the scope of this invention.

References to two compared elements, features, etc. As being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing example embodiments of the present disclosure and is not intended to limit the present disclosure.

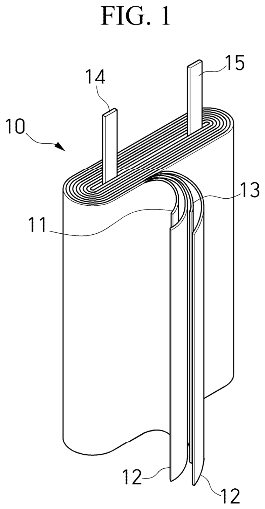

FIG. 1 shows an electrode assembly for positioning within a case of a secondary battery.

An electrode assembly 10 may be formed by winding or stacking a first electrode plate 11, a separator 12, and a second electrode plate 13, which are formed as thin plates or films. When the electrode assembly 10 is a wound stack, a winding axis may be in the longitudinal direction. In other embodiments, the electrode assembly 10 may be a stack type rather than a winding type, and the shape of the electrode assembly 10 is not limited in the specific examples provided in the present disclosure. In another example, the electrode assembly 10 may be or include a Z-stack electrode assembly in which a positive electrode plate and a negative electrode plate are provided to both sides (e.g., opposite sides) of a separator, which is then bent (or folded) into a Z-stack. In addition, one or more electrode assemblies may be stacked such that long sides of the electrode assemblies are adjacent to each other and accommodated together in the case. The number of electrode assemblies in the case is not limited in the present disclosure. The first electrode plate 11 of the electrode assembly may act as a negative electrode, and the second electrode plate 13 may act as a positive electrode. In other examples, the first electrode 11 may act as a positive electrode, and the second electrode 13 may act as a negative electrode.

The first electrode plate 11 may be formed by applying a first electrode active material, such as graphite or carbon, to a first electrode current collector formed of a metal foil, such as copper, a copper alloy, nickel, or a nickel alloy. The first electrode plate 11 may include a first electrode tab 14 that is or includes a region where first electrode active material is not applied. The first electrode tab 14 may be connected to an external first terminal. In some example embodiments, when the first electrode plate 11 is made, the first electrode tab 14 may be formed by being cut to protrude to one side of the electrode assembly 10. In other examples, the first electrode tab 14 may protrude to (or protrude from) one side of the electrode assembly 10 more than, e.g., farther than or beyond, the separator 12 without being separately cut.

The second electrode plate 13 may be formed by applying a second electrode active material, such as a transition metal oxide, on a second electrode current collector formed of or including a metal foil, such as aluminum or an aluminum alloy. The second electrode plate 13 may include a second electrode tab 15 (e.g., a second uncoated portion) that is or includes a region where the second electrode active material is not applied. The second electrode tab 15 may be connected to an external second terminal. In some example embodiments, the second electrode tab 15 may be formed by being cut to protrude to the other side (e.g., the opposite side) of the electrode assembly 10 when the second electrode plate 13 is made. In other embodiments, the second electrode plate 13 may protrude to the other side of the electrode assembly more than, e.g., farther than or beyond, the separator 12 without being separately cut.

The first electrode tab 14 may be located on the left side of the electrode assembly 10, and the second electrode tab 15 may be located on the right side of the electrode assembly 10. In other embodiments, the first electrode tab 14 and the second electrode tab 15 may be located on one side of the electrode assembly 10 in the same direction. Here, the left and right sides are defined according to the electrode assembly 10 as depicted in FIG. 1, and the positions may change when the secondary battery is rotated left and right or up and down.

The separator 12 hinders or substantially prevents a short-circuit between the first electrode 11 and the second electrode 13 while allowing movement of lithium ions therebetween. The separator 12 may be made of or include, for example, a polyethylene film, a polypropylene film, a polyethylene-polypropylene film, etc.

In some example embodiments, the electrode assembly 10 may be accommodated in the case (not shown in Fig. 1) along with an electrolyte. In a pouch-type secondary battery, an electrode assembly 10 may be accommodated in a pouch 20 made of or including flexible material. In the case of a prismatic secondary battery, an electrode assembly 10 may be accommodated in a prismatic metal casing 59.

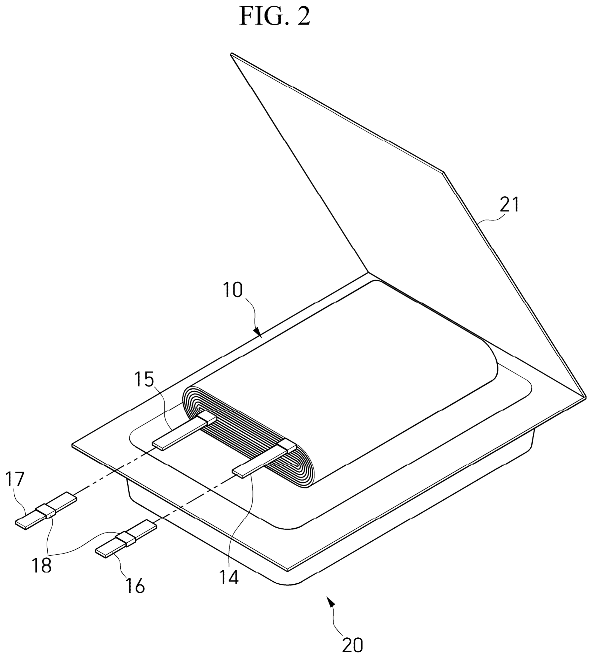

FIG. 2 shows a pouch-type secondary battery.

The pouch-type secondary battery includes an electrode assembly 10 and a pouch 20 that accommodates or contains the electrode assembly 10 therein.

The electrode assembly 10 may be the same as the electrode assembly 10 illustrated in FIG. 1. The first electrode tab 14 and the second electrode tab 15 of the electrode assembly 10 may be electrically connected to respective external first and second terminal leads 16 and 17 by, e.g., welding or another attaching method that preserves conductivity. At least a portion of each of the first terminal lead 16 and the second terminal lead 17 may be attached or covered with a tab film 18 for insulation from the pouch 20.

The pouch 20 may be sealed by having sealing parts 21 at the edges contact each other while accommodating or containing the electrode assembly 10 therein, in which case the sealing may be achieved with the tab film 18 interposed between the sealing parts 21. The sealing parts 21 of the pouch 20 may be made of or include a thermal fusion material that has weak adhesion to metal. Thus, the pouch 20 may be fused while interposing the thin tab film 18 between the sealing parts 21.

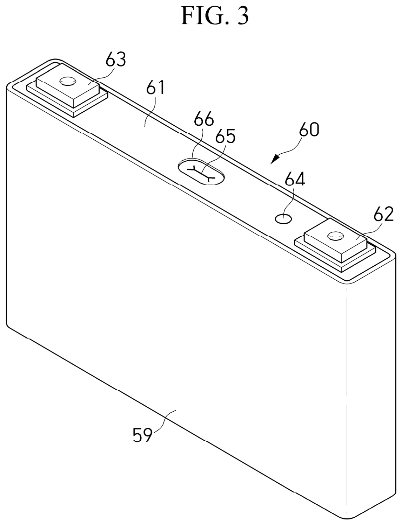

FIG. 3 shows the external appearance configuration of a prismatic secondary battery.

A prismatic case 59 defines an external appearance of the prismatic secondary battery. The prismatic case 59 may be made of or include a conductive metal, such as aluminum, aluminum alloy, or nickel-plated steel. The case 59 provides a space for accommodating or containing the electrode assembly 10 therein.

A cap assembly 60 may include a cap plate 61 that covers an opening of the case 59, and the case 59 and the cap plate 61 may be made of or include a conductive material. Inside the case 59, the first terminal 63 and a second terminal 62 may be electrically connected to the first electrode tab 14 and the second electrode tab 15 of the electrode assembly 10 illustrated in FIGS. 1 and 2. The first terminal 63 and the second terminal 62 may protrude outward through the cap plate 61.

The cap plate 61 may be equipped with or include an electrolyte injection port 64 with a sealing plug therein. A vent 66 may be formed in the cap plate 61 that includes a notch 65. The vent 66 is configured to discharge any gas generated inside the secondary battery.

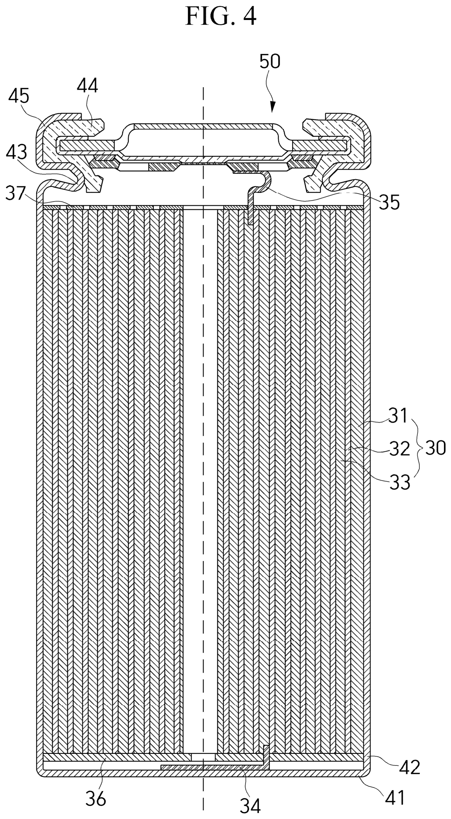

FIG. 4 is a cross-sectional view of a cylindrical secondary battery.

The cylindrical secondary battery includes an electrode assembly 30, a case accommodating the electrode assembly 30 and an electrolyte therein, a cap assembly 50 coupled to an opening of the case to seal the case, and an insulating plate 37 located between the electrode assembly 30 and the cap assembly 50 inside the case.

The electrode assembly 30 may include a separator 32 between a first electrode 33 and a second electrode 31. The electrode assembly 30 may be wound in a jelly-roll form.

The first electrode 33 may include a first substrate and a first active material layer provided on the first substrate. A first lead tab 35 may extend outward from a first uncoated portion of the first substrate where the first active material layer is not provided, and the first lead tab 35 may be electrically connected to the cap assembly 50.

The second electrode 31 may include a second substrate and a second active material layer provided on the second substrate. A second lead tab 34 may extend outward from a second uncoated portion of the second substrate where the second active material layer is not provided, and the second electrode 31 may be electrically connected to the case. The first lead tab 35 and the second lead tab 34 may extend in opposite directions.

The first electrode 33 may constitute a positive electrode. In such a case, the first substrate may be composed of or include, for example, aluminum foil, and the first active material layer may include, for example, a transition metal oxide. The second electrode 31 may constitute a negative electrode. In such a case, the second substrate may be composed of or include, for example, copper foil or nickel foil, and the second active material layer may include, for example, graphite.

The separator 32 may reduce or prevent a short-circuit between the first electrode 33 and the second electrode 31 while allowing movement of lithium ions therebetween. The separator 32 may be made of or include, for example, at least one of a polyethylene film, a polypropylene film, a polyethylene-polypropylene film, etc.

The case accommodates or contains the electrode assembly 30 and the electrolyte, and the case forms the external appearance of the secondary battery together with the cap assembly 50. The case may have a substantially cylindrical body portion 42 and a bottom portion 41 connected to one side of the body portion 42. A beading part 43 deformed inwardly may be formed in the body portion 42, and a crimping part 45 bent inwardly may be formed at an open end of the body portion 42.

The beading part 43 may reduce or prevent movement of the electrode assembly 30 inside the case. The beading part 43 also may facilitate seating of a gasket 44 and the cap assembly 50. A crimping part 45 may firmly fix the cap assembly 50 by pressing the edge of the cap assembly 50 against the gasket 44. The case may be formed of or include, for example, iron plated with nickel.

The cap assembly 50 may be fixed to the inside of the crimping part 45 through the gasket 44 to seal the case. The cap assembly 50 may include an upper cap (a cap up), a safety vent, a lower cap (a cap down), an insulating member, and a subplate. But the present disclosure is not limited to this example and may be variously modified.

The upper cap may be located at the top of the cap assembly 50. The upper cap may include a terminal portion that protrudes convexly upward and is connected to an external circuit, and the upper cap may include an outlet for discharging gas may be located around the terminal portion.

The safety vent may be located below the upper cap. The safety vent may include a protrusion that protrudes convexly downward and is connected to the subplate. At least one notch may be formed in the safety vent around the protrusion.

When gas is generated due to overcharging or abnormal operation of the secondary battery, the protrusion may be deformed upward by pressure and may separate from the subplate, and the safety vent may break along the notch. The broken safety vent may prevent the secondary battery from exploding by discharging gas to outside of the secondary battery.

The lower cap may be located below the safety vent. The lower cap down may be formed with a first opening for exposing the protrusion of the safety vent and a second opening for discharging gas. The insulating member may be located between the safety vent and the lower cap to insulate the safety vent and the lower cap.

The subplate may be located below the lower cap. The subplate may be fixed to a lower surface of the lower cap to block the first opening of the lower cap, and the protrusion of the safety vent may be fixed to the subplate. The first lead tab 35 may extend from the electrode assembly 30 may be fixed to the subplate. Accordingly, the upper cap, the safety vent, the lower cap, and the subplate may be electrically connected to the first electrode 33 of the electrode assembly 30.

The insulating plate 37 may be positioned below the beading portion 43 and be in contact with the electrode assembly 30. The insulating plate 37 may be provided with a tab opening through which the first lead tab 35 extends. The cap assembly 50, which is electrically connected to the first electrode 33 by the first lead tab 35, may face the electrode assembly 30 with the insulating plate 37 interposed therebetween, and the cap assembly may be insulated from the electrode assembly 30 by the insulating plate 37. Another insulating plate 36 may be included for insulation between the electrode assembly 30 and the bottom portion 41 of the case.

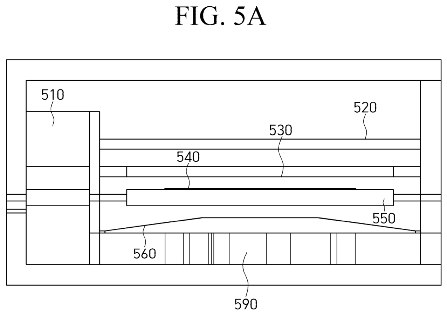

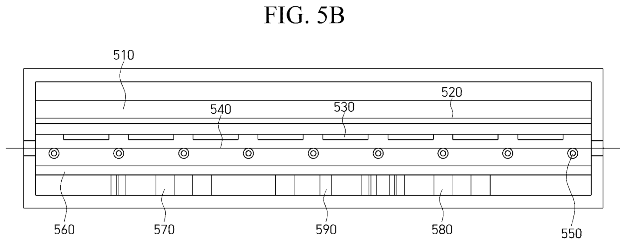

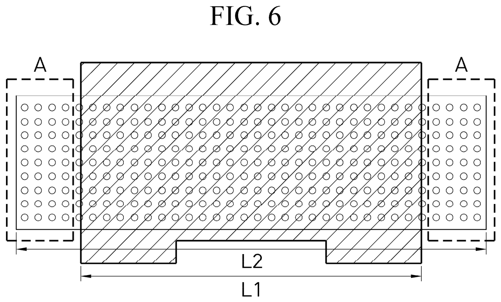

FIGS. 5A and 5B illustrate the structure of an internal circulation-type drying furnace according to related art, and FIG. 6 illustrates a width of a coated electrode and a width of a perforated plate nozzle according to related art. In particular, FIG. 5A illustrates a front view of the internal circulation-type drying furnace according to related art, and FIG. 5B illustrates a side view of the internal circulation-type drying furnace according to related art.

A furnace for drying a wet-coated electrode according to the related art may include a roller 550 that transfers a coated electrode 540, and a high efficiency particulate air (HEPA) filter 510, a perforated plate heater 520, and a perforated plate nozzle 530 that are located above a transfer path for the coated electrode 540. The furnace may further include a first circulation fan 570, a second circulation fan 580, and an exhaust fan 590 that are located below the transfer path for the coated electrode 540.

Airflow supplied by the first circulation fan 570 and the second circulation fan 580 may pass through the HEPA filter 510, by which impurities are filtered out, and the airflow may be heated to an intended temperature by the perforated plate heater 520 to thereby dry the coated electrode 540 with a uniform flow rate through the perforated plate nozzle 530. In this process, a portion of a solvent may be discharged out of the drying furnace by the exhaust fan 590.

As illustrated in FIG. 6, according to the related art, to ensure drying uniformity in a width direction of the coated electrode 540, a width L2 of the perforated plate nozzle 530 may be greater than a width L1 of the coated electrode 540. Therefore, airflow in area A, i.e., airflow in an area beyond opposite ends of the coated electrode 540 relative to the width L1, may be recirculated by the first circulation fan 570, the second circulation fan 580, and the exhaust fan 590 via the perforated plate 560 over the fans, or partially discharged, rather than being used for drying the coated electrode 540. Thus, the configuration shown in FIG. 6 may be inefficient.

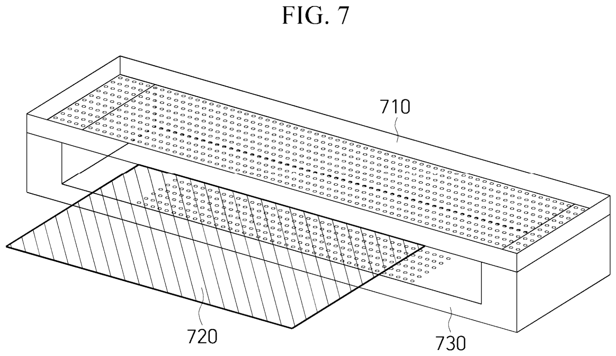

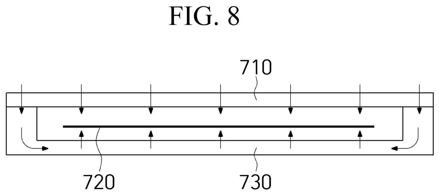

FIG. 7 illustrates an apparatus for drying a coated electrode according to embodiments of the present disclosure, and FIG. 8 illustrates a conceptual diagram of airflow movement resulting from a U-shaped duct according to embodiments of the present disclosure.

The apparatus for drying the coated electrode according to embodiments of the present disclosure may employ improved nozzle design that is more efficient in a process of drying a coated electrode for lithium-ion batteries.

According to embodiments of the present disclosure, the apparatus may include a perforated plate nozzle 710 that is located above a transfer path for a coated electrode 720. The apparatus also includes a duct 730 that connects to areas of the perforated plate nozzle 710 that do not face the coated electrode 720. The duct 730 may supply hot air that flows outside opposite ends of the coated electrode 720 to a lower portion of the coated electrode 720. The duct 730 may be have a U-shaped configuration.

The duct 730 may include a perforated area in a region facing a lower surface of the coated electrode 720. The perforated area makes it possible to uniformly supply hot air to the lower portion of the coated electrode 720. With the duct 730 configuration, the temperature of the coated electrode 720 may be increased, thereby resulting in the effect of improving energy efficiency within the same drying rate design range.

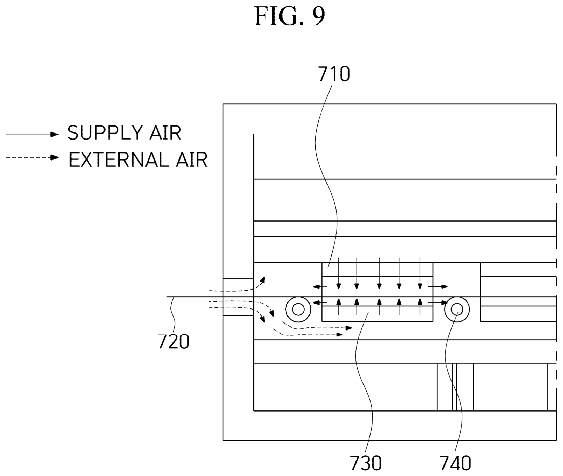

FIG. 9 is a conceptual diagram of external air movement resulting from the installation of the U-shaped duct in a drying furnace according to embodiments of the present disclosure.

The drying furnace may be maintained at a negative pressure, allowing external air to enter the drying furnace from an inlet through which the coated electrode 720 is introduced and through an outlet through which the coated electrode 720 exits. According to the related art, external air introduced from the inlet and the outlet flows toward the lower portion of the coated electrode, thereby resulting in a decrease in energy efficiency in the drying process. However, according to embodiments of the present disclosure, hot air may be supplied, via the U-shaped duct 730, to the lower portion of the coated electrode 720 that is transferred by a roller 740 through the perforated area located below the coated electrode 720. Such a configuration prevents introduction of external air to the lower portion of the coated electrode 720 and resulting in the advantage of improving energy efficiency.

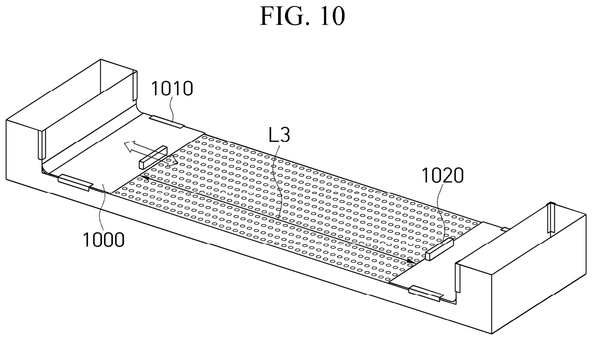

FIG. 10 shows a mechanism for adjusting a width of a perforated plate according to embodiments of the present disclosure.

A door 1000 capable of adjusting a width L3 of the perforated plate may be provided on an inner surface of the duct according to embodiments of the present disclosure. The door may be a flexible door 1000. It may be equipped with a door guide 1010 that prevents the door from being displaced in a direction perpendicular to the width direction of the perforated plate. A doorknob 1020 supports sliding movement of the door 1000 to adjust the width L3 of the perforated plate. The width L3 of the perforated plate on the inner surface of the duct may be adjusted by manipulating the doorknob 1020, thereby allowing for adjustment of the position and surface area of the perforated area through which hot air is discharged to the lower portion of the coated electrode through the duct.

Air supply to the lower portion of the coated electrode may be achieved through perforations in a residual area excluding an area covered with the door 1000. Thus, it is possible to prevent air vortices and improve drying uniformity.

Holes formed in the perforated area may be designed such that, with respect to a center of the inner surface of the duct, diameters of the holes gradually decrease in the width direction of the perforated plate. To enhance the drying efficiency, the diameters, area, shape of the perforations, inclination angles in the holes, or the like may be adjusted. The perforated area may supply uniform hot air to the lower portion of the coated electrode, and the perforation shape may be a slit shape.

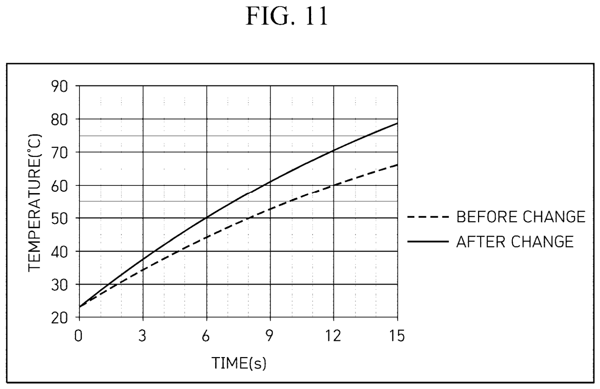

FIG. 11 shows the effect of improvement in temperature increase of the coated electrode over time according to embodiments of the present disclosure. In particular, FIG. 11 illustrates results of heat/flow simulation performed under the same process conditions using commercial software.

It can be confirmed that with a drying apparatus according to embodiments of the present disclosure, the average temperature increases 12.5 °C more than the related art for 15 seconds. As the temperature of the coated electrode increases, the evaporation rate of the solvent also increases, resulting in a reduction of energy applied at the same drying rate. Thus, the process is made more energy efficient. Process conditions (e.g., a nozzle temperature, and a fan RPM) may be adjusted in accordance with the improvement in energy efficiency. Thus, it is possible to improve the quality of the electrode, particularly in terms of binder distribution.

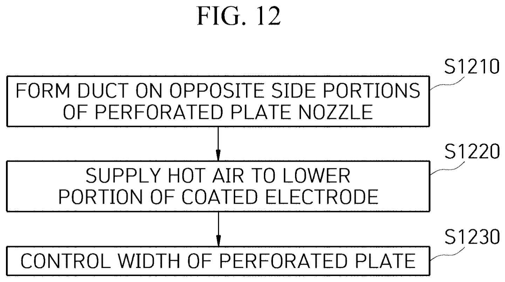

FIG. 12 illustrates a method of drying a coated electrode according to embodiments of the present disclosure.

The method of drying a coated electrode may include a step S1210 of designing a duct connected to opposite side portions of a perforated plate nozzle, a step S1220 of supplying hot air to the lower portion of the coated electrode through the duct, and a step S1230 of performing a process of drying the coated electrode by controlling the width of the perforated plate.

In step S1210, the duct may be designed to connect with areas of the perforated plate nozzle (e.g., opposite side portions of the perforated plate nozzle) that do not face the coated electrode among areas of the perforated plate nozzle located above a transfer path for the coated electrode. The duct may be designed in a U-shape in the step S1210.

In step S1220, hot air may be supplied to the lower portion of the coated electrode through the duct including a perforated area in a region facing the lower surface of the coated electrode. Further, in step S1220 hot air may be supplied to the lower portion of the coated electrode to block external air introduced from the inlet or outlet for the coated electrode.

In step S1230 an operation of adjusting the width of the perforated plate may be performed using, for example, a flexible door including a door guide that is located below the coated electrode to prevent displacement of the door in a direction perpendicular to the width direction of the perforated plate. Also, a doorknob that supports sliding movement of the flexible door may be used to adjust the width of the perforated plate. In step S1230, holes formed in the perforated plate may be designed such that diameters of the holes are gradually reduced from a central area to side areas.

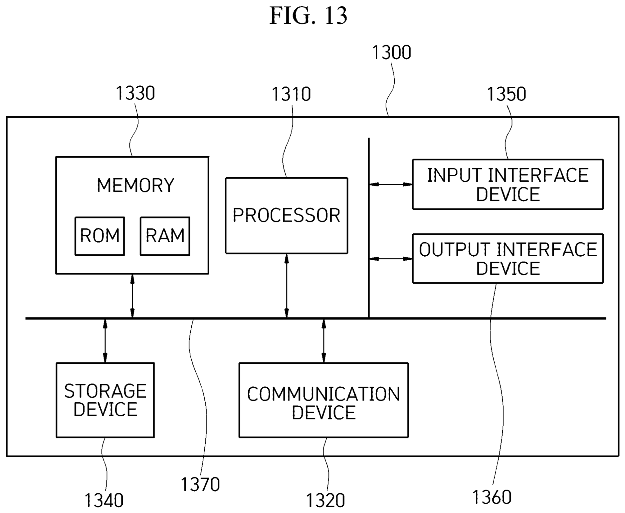

FIG. 13 is a block diagram of a computer system for implementing the method according to embodiments of the present disclosure.

Referring to FIG. 13, the computer system 1300 may include at least one of a processor 1310, a memory 1330, an input interface device 1350, an output interface device 1360, and a storage device 1340, with these elements communicating with one another through a bus 1370. The computer system 1300 may also include a communication device 1320 coupled to a network. The processor 1310 may be or may include a central processing unit (CPU) or a semiconductor device that executes instructions stored in the memory 1330 or in the storage device 1340. The memory 1330 and the storage device 1340 may include various types of volatile or nonvolatile storage media. For example, the memory may include a read-only memory (ROM) and a random access memory (RAM). In example embodiments of the present disclosure, the memory may be located inside or outside the processor, and the memory may be connected to the processor through various known means. The memory is or includes various types of volatile or nonvolatile storage media, and for example, may include a read-only memory (ROM) or a random access memory (RAM).

Accordingly, example embodiments of the present disclosure may be implemented as a method implemented in a computer or a non-transitory computer-readable medium storing computer-executable instructions. In an example embodiment, when executed by the processor, computer-readable instructions may perform a method according to at least one aspect of the present disclosure.

The communication device 1320 may transmit or receive wired signals or wireless signals.

Additionally, the method according to an example embodiment of the present disclosure may be implemented in the form of program instructions that can be executed through various computer means and recorded on a computer-readable medium.

The computer-readable medium may include program instructions, data files, data structures, etc., singly or in combination. The program instructions recorded on the computer-readable medium may be specially designed and configured for the example embodiments of the present disclosure, or the program instructions may be known and usable by those skilled in the art of computer software. Computer-readable recording media may include a hardware device configured to store and perform program instructions. For example, the computer-readable recording media may be or include magnetic media such as hard disks, floppy disks, and magnetic tapes, optical media such as CD-ROMs and DVDs, magneto-optical media such as floptical disks, ROM, RAM, flash memory, etc. The program instructions may include not only machine language codes such as that generated by a compiler, but also high-level language codes that can be executed by a computer through an interpreter, etc.

The apparatus for drying a coated electrode according to embodiments of the present disclosure may include a memory 1330 configured to store a program that performs nozzle design considering energy efficiency in a process of drying the coated electrode, and a processor 1310 configured to execute the program. The processor 1310 may perform the nozzle design including a duct connected to certain areas of the perforated plate nozzle located above the transfer path for the coated electrode to supply hot air that flows outside the opposite ends of the coated electrode to the lower portion of the coated electrode.

The processor 1310 may design the duct in a U-shape. The processor 1310 may adjust the width of the perforated plate by controlling the flexible door located below the transfer path for the coated electrode. The processor 1310 may adjust the width of the perforated plate, taking into account specifications of the coated electrode.

Hereinafter, materials that may be usable for the secondary battery according to examples of the present disclosure will be described.

As the positive electrode active material, a compound capable of reversibly intercalating/deintercalating lithium (e.g., a lithiated intercalation compound) may be used. For example, at least one of a composite oxide of lithium and a metal such as at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by at least any one of the following formulas may be used: LiₐA_{1-b}X_{b}O_{2-c}D_{c} (0.90≤a≤1.8, 0≤b≤0.5, 0≤c≤0.05) ; LiₐMn_{2-b}X_{b}O_{4-c}D_{c} (0. 90≤a≤1.8, 0≤b≤0.5, 0≤c≤0.05); LiₐNi_{1-b-c}Co_{b}X_{c}O_{2-α}D_{α} (0. 90≤a≤1.8, 0≤b≤0.5, 0≤c≤0.5, 0<α<2) ; LiₐNi_{1-b-c}Mn_{b}X_{c}O_{2-α}D_{α} (0. 90≤a≤1.8, 0≤b≤0.5, 0≤c≤0.5, 0<α<2) ; LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{d}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is or includes at least Ni, Co, Mn, or a combination thereof; X is or includes at least Al, Ni, Co, Mn, Cr, Fe, Mg, Sr, V, a rare earth element, or a combination thereof; D is or includes at least O, F, S, P, or a combination thereof; G is or includes at least Al, Cr, Mn, Fe, Mg, La, Ce, Sr, V, or a combination thereof; and L1 is or includes at least Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The amount of the positive electrode active material is in a range of about 90 wt% to about 99.5 wt% based on 100 wt% of the positive electrode active material layer. The amount of the binder and the conductive material is in a range of about 0.5 wt% to about 5 wt%, respectively, based on 100 wt% of the positive electrode active material layer.

The current collector may be or include aluminum (Al) but is not limited thereto.

The negative electrode active material may include a material capable of reversibly intercalating/deintercalating at least one of lithium ions, lithium metal, an alloy of lithium metal, a material capable of being doped and undoped with lithium, or a transition metal oxide.

The material capable of reversibly intercalating/deintercalating lithium ions may be or include a carbon-based negative electrode active material, which may include, for example, at least crystalline carbon, amorphous carbon, or a combination thereof. Examples of the crystalline carbon may include graphite, such as natural graphite or artificial graphite, and examples of the amorphous carbon may include at least one of soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be or include at least silicon, a silicon-carbon composite, SiOx (0 < x < 2), a Si-based alloy, or a combination thereof.

The silicon-carbon composite may be or include a composite of silicon and amorphous carbon. According to one example embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, at least one of copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent may constitute a medium through which ions involved in the electrochemical reaction of the battery can move. The non-aqueous organic solvent may be or include at least a carbonate-based, an ester-based, an ether-based, a ketone-based, an alcohol-based solvent, an aprotic solvent, and may be used alone or in combination of two or more.

Depending on the type of lithium secondary battery, a separator may be present between the first electrode plate (e.g., the negative electrode) and the second electrode plate (e.g., the positive electrode). For the separator, at least polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer. In other embodiments, the organic and inorganic materials may be in the form of a coating layer containing an organic material and a coating layer containing an inorganic material that are laminated on each other.

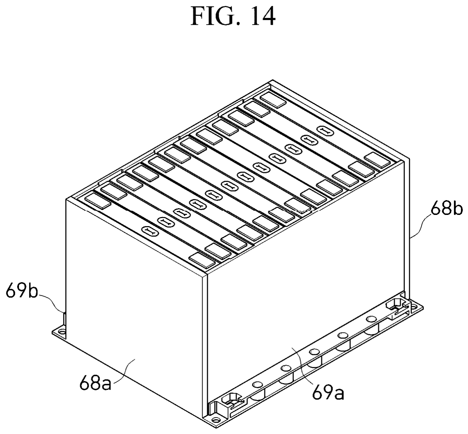

FIG. 14 shows a secondary battery module in which secondary batteries manufactured according to examples of the present disclosure are arranged. With the increase in secondary battery capacity for driving electric vehicles, and the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in arrangement (direction) and number to obtain desired voltage and current specifications.

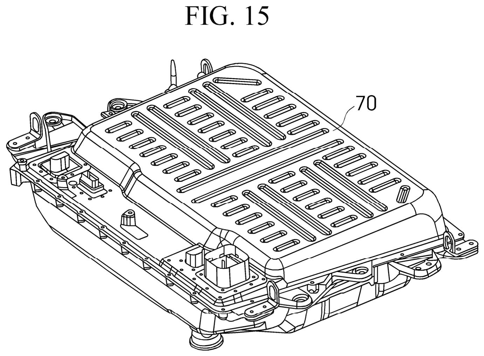

FIG. 15 is an illustration schematically showing the configuration of a battery pack 70 according to example embodiments of the present disclosure. Referring to FIG. 15, a battery pack 70 may include an assembly to which individual batteries are electrically connected, and a pack housing accommodating the same. Other components including a bus bar, a cooling unit, external terminals for electrically connecting batteries, etc., are not shown in the drawings.

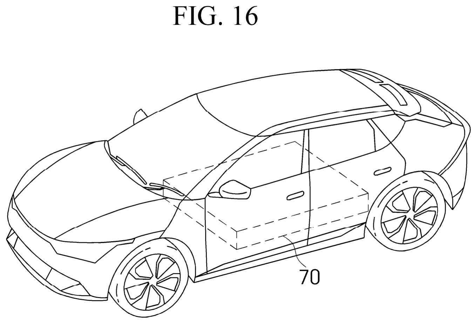

The battery pack 70 may be mounted on (or in) a vehicle. The vehicle may be, for example, an electric vehicle, a hybrid vehicle, a plug-in hybrid vehicle, and the like. The vehicle may be a four-wheeled vehicle or a two-wheeled vehicle but is not limited thereto. FIG. 16 shows a vehicle V that includes the battery pack 70 shown in FIG. 15 on the lower body thereof. The vehicle V may operate by (e.g., may be powered by) receiving power from the battery pack 70.

Although the present disclosure has been described above with respect to example embodiments thereof, the present disclosure is not limited thereto. Various modifications and variations can be made thereto by those skilled in the art within the scope of the present invention as defined in the claims as appended hereto.

## Claims

1. An apparatus for drying a coated electrode, the apparatus comprising:
a perforated plate nozzle located above a transfer path for the coated electrode; and
a duct connected to an area of the perforated plate nozzle that does not face the coated electrode among areas of the perforated plate nozzle, the duct being configured to supply hot air flowing outside opposite ends of the coated electrode to a lower portion of the coated electrode.

2. The apparatus as claimed in claim 1, wherein the duct is formed in a U-shape.

3. The apparatus as claimed in claim 1 or claim 2, wherein the duct comprises a perforated area in a region facing a lower surface of the coated electrode, and the perforated area is configured to supply hot air to the lower portion of the coated electrode.

4. The apparatus as claimed in any one of the preceding claims, wherein the duct is configured to cause a temperature of the coated electrode to increase.

5. The apparatus as claimed in any one of the preceding claims, wherein the duct is configured to prevent introduction of external air from an inlet and an outlet of the apparatus that are arranged along the transfer path for the coated electrode by directing hot air supplied to the lower portion of the coated electrode.

6. The apparatus as claimed in any one of the preceding claims, further comprising a door provided on an inner surface of the duct below the transfer path, the door being configured to adjust a width of a perforated plate.

7. The apparatus as claimed in claim 6, wherein the door comprises:
a door guide configured to prevent the door from being displaced in a direction perpendicular to a width direction of the perforated plate; and
a doorknob configured to support sliding movement of the door to adjust the width of the perforated plate, and optionally wherein a position and a surface area of a perforated area through which hot air is discharged to the lower portion of the coated electrode are adjustable by manipulation of the doorknob.

8. The apparatus as claimed in claim 7, wherein the duct is configured such that supply of air to the lower portion of the coated electrode is through perforations in a residual area other than an area covered with the flexible door among areas of the perforated plate, and
wherein diameters of the perforations decrease from a central area of the perforate plate to a side portion area thereof.

9. A method of drying a coated electrode, the method being performed by an apparatus for drying the coated electrode and comprising steps of:
(a) designing a duct connected to opposite side portions of a perforated plate nozzle;
(b) supplying hot air to a lower portion of the coated electrode through the duct; and
(c) performing a process of drying the coated electrode by controlling a width of a perforated plate.

10. The method as claimed in claim 9, wherein the step (a) comprises designing the duct connected to an area of the perforated plate nozzle that does not face the coated electrode among areas of the perforated plate nozzle located above a transfer path for the coated electrode.

11. The method as claimed in claim 9 or claim 10, wherein the step (a) comprises designing the duct in a U-shape.

12. The method as claimed in any one of claims 9 to 11, wherein the step (b) comprises either or both i) supplying hot air to the lower portion of the coated electrode through the duct including a perforated area in a region facing a lower surface of the coated electrode, and/or ii) supplying hot air to the lower portion of the coated electrode and blocking external air from being introduced from an inlet and an outlet of the apparatus that are provided for the coated electrode.

13. The method as claimed in any one of claims 9 to 12, wherein the step (c) comprises controlling the width of the perforated plate using a door comprising (i) a door guide disposed below the coated electrode and configured to prevent the door from being displaced and (ii) a doorknob configured to support sliding movement of the door for adjusting the width of the perforated plate, and optionally wherein the step (c) comprises performing the drying process by supplying the hot air through holes having diameters that decrease from a central area to a side area.

14. An apparatus for drying a coated electrode, comprising:
a memory storing a program that performs nozzle design based on energy efficiency in a process of drying the coated electrode; and
a processor configured to execute the program,
wherein the processor performs the nozzle design to include a duct connected to an area of a perforated plate nozzle located above a transfer path for the coated electrode, with the duct being configured to supply hot air flowing outside opposite ends of the coated electrode to a lower portion of the coated electrode, and optionally wherein the processor designs the duct in a U-shape.

15. The apparatus as claimed in claim 14, wherein the processor adjusts a width of a perforated plate by controlling a door located below a transfer path for the coated electrode, and optionally wherein the processor adjusts the width of the perforated plate based on specifications of the coated electrode.
